(19) Europäisches Patentamt
European Patent Office
Office européen des brevets

(11) EP 0 913 095 A1

(12) **EUROPEAN PATENT APPLICATION**
published in accordance with Art. 158(3) EPC

(43) Date of publication:
**06.05.1999 Bulletin 1999/18**

(21) Application number: **97929534.2**

(22) Date of filing: **04.07.1997**

(51) Int. Cl.6: **A23K 1/16**, A23K 1/165, A23K 1/18

(86) International application number:
**PCT/JP97/02334**

(87) International publication number:
**WO 98/01039 (15.01.1998 Gazette 1998/02)**

(84) Designated Contracting States:
**BE ES FR NL PT**

(30) Priority: **08.07.1996 JP 178083/96**

(71) Applicant:
**IDEMITSU MATERIALS CO., LTD.**
**Tokyo 108-0014 (JP)**

(72) Inventors:
- **AOYAMA, Tomoya,**
**Idemitsu Materials Co., Ltd.**
**Tokyo 108 (JP)**
- **SUGIMOTO, Yasuaki,**
**Idemitsu Materials Co., Ltd.**
**Tokyo 108 (JP)**

(74) Representative:
**Bannerman, David Gardner et al**
**Withers & Rogers**
**4 Dyer's Buildings**
**Holborn**
**London EC1N 2QP (GB)**

# (54) FEED COMPOSITION FOR POULTRY

(57) A feed composition which has such excellent effects that it prevents ascites and sudden death syndrome and improves survival rate in the raising of poultry raised mainly for meat production purposes, such as chicken, particularly broilers, is provided by blending a coenzyme, preferably coenzyme $Q_9$ and/or coenzyme $Q_{10}$ and a substance selected from the group consisting of antioxidants, preferably vitamin E, antacid agents, preferably sodium hydrogencarbonate, and ammonia generation inhibitors, preferably dialdehyde starch, into a feed composition for poultry.

Further, a feed composition for poultry which has excellent effects that it prevents ascites and sudden death syndrome effectively and improves survival rate in the raising of poultry raised mainly for meat production purposes, such as chicken, particularly broilers, and which can preserve effective components stably and maintain their pharmaceutical effects during the storage of the feed is provided by blending a coenzyme Q, preferably coenzyme $Q_9$ and/or coenzyme $Q_{10}$ and processed yeast cells, preferably a fungi processed product of an yeast selected from the group consisting of *Saccharomyces cerevisiae*, *Saccharomyces carlsbergensis*, *Yarrowia lipolytica*, *Torulopsis utilis* and *Trichosporon cutaneum* into a feed composition for poultry.

EP 0 913 095 A1

## Description

### TECHNICAL FIELD

The present invention relates to a feed composition for poultry and, more specifically, to a feed composition for poultry which has such excellent effects that it effectively prevents ascites and sudden death syndrome which occur during the raising of poultry raised mainly for carnivorous purposes such as chickens, particularly broilers, and that it improves the survival rate.

### BACKGROUND ART

In the poultry industry, specifically chickens, particularly broilers, breeding and feeding technologies for chicken production used have been developed with importance attached to the weight increasing rate and feed conversion rate so as to seek after improvement in productivity. However, since the development of the function of the heart does not keep up with the weight increasing rate during the period of growth, cardiac insufficiencies and ascites have occurred frequently in chickens, which has given a great economic blow to the broiler industry. Especially under such conditions that a large amount of oxygen is required as in raising environments such as in winter and highlands and during the period of growth, or that oxygen is insufficient as in the case of raising a large number of chickens in a closed environment, the occurrence of the above diseases is marked.

Technologies for preventing the ascites and sudden death syndrome (may be referred to as "SDS" hereinafter) of broilers have been developed and the following three technologies have been known so far.

(1) Quinones containing a coenzyme Q are prescribed to protect broilers from ascites and to improve the survival rate (Japanese Laid-open Patent Application No. 6-287136).
(2) A feed containing coenzymes $Q_9$ - $Q_{10}$ for preventing ascites and sudden death syndrome (Japanese Laid-open Patent Application No. 7-123928).
(3) 1% of sodium hydrogencarbonate is added to an ordinary feed to prevent ascites (J. Appl. Poultry Res. Vol. 3, pp. 244-252, 1994).

However, although a certain measure of effect can be obtained by the above technologies, ascites and sudden death syndrome still occur. Therefore, the development of a technology which can achieve a more perfect prevention effect has been desired. In the technology (3), since a large amount of sodium hydrogencarbonate is added to a feed, there are problems such as the amount of water drunk by a broiler increases or the feed scattered on the floor becomes rotten, thereby deteriorating sanitary conditions.

If a feed containing a component having a pharmaceutical effect, such as a coenzyme Q, is kept at normal temperature after preparation, the component changes into another substance by oxidation or degradation along with the passage of time, whereby the content of the component contained in the feed decreases and disappears in the end. Thereby, a feed containing a component having a pharmaceutical effect such as a coenzyme Q which has been kept at room temperature for a long time has involved such a risk that the component having a pharmaceutical effect which is first added to the feed may not function fully and a substance generated from the component by conversion may cause trouble in chickens. To prevent this, close attention is paid to the management including storage of a feed, low-temperature storage is carried out, countermeasures against long-time transportation at high temperature season are taken, and a feed is consumed quickly after preparation. However, all of those prevent a reduction in feed costs, and it is feared that trouble is caused by imperfect storage of a feed.

### DISCLOSURE OF THE INVENTION

In view of the above problems, it is an object of the present invention to provide a feed composition for poultry which has such excellent effects that it prevents ascites and sudden death syndrome effectively during the raising of poultry raised mainly for meat production purposes such as chickens, particularly broilers, and that it improves the survival rate as well as a feed composition for poultry which can preserve an effective component stably during the storage of a feed and maintain a pharmaceutical effect in addition to the above excellent effects.

The present inventors have conducted an intensive study to solve the above problems and has found that ascites and sudden death syndrome are prevented much more when a feed containing a pharmaceutical preparation which comprises a combination of a coenzyme Q and a substance selected from antioxidants, antacid agents and ammonia generation inhibitors is given to broilers than when a feed containing only a coenzyme Q is given to the broilers, thereby greatly reducing the mortality rate of broilers and improving the survival rate. The present inventors have also found that ascites and sudden death syndrome are prevented more when a feed containing a coenzyme Q and

processed yeast cells is given to broilers than when a feed containing only a coenzyme Q is given to the broilers, thereby reducing the mortality rate of broilers and improving the survival rate, and further that the coenzyme Q contained in the feed containing both a coenzyme Q and processed yeast cells can be preserved stably at normal temperature. Thus, the present invention has been completed.

That is, the present invention is a feed composition for poultry which contains a coenzyme Q and a substance selected from the group consisting of antioxidants, antacid agents and ammonia generation inhibitors.

Examples of the coenzyme Q used in the feed composition for poultry of the present invention may include coenzyme $Q_9$ represented by the following general formula (I) and coenzyme $Q_{10}$ represented by the following general formula (II).

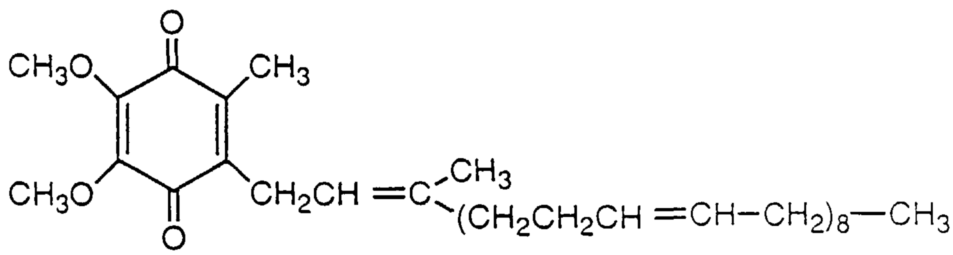

( I )

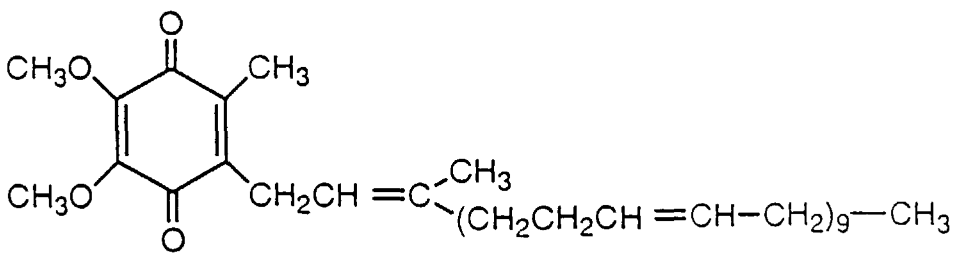

( II )

Further, the content of the coenzyme Q contained in the feed composition for poultry of the present invention is, to state specifically, about 0.0005 to 0.5 wt% based on the total amount of the feed composition.

Furthermore, the antioxidant used in the feed composition for poultry of the present invention is exemplified by vitamin E, the antacid agent exemplified by sodium hydrogencarbonate, and the ammonia generation inhibitor exemplified by dialdehyde starch, Yucca extract, sarsasaponin, hydroxamic acid and the like.

When the feed composition for poultry of the present invention contains a coenzyme Q and vitamin E as an antioxidant, the amount ratio of vitamin E to coenzyme Q is preferably 0.01 to 100 IU as vitamin E activity based on 1 mg of the coenzyme Q.

When the feed composition for poultry of the present invention contains a coenzyme Q and an antacid agent, the weight ratio of the coenzyme Q to the antacid agent contained in the composition is preferably about 1:2 to 1:4000.

When the feed composition for poultry of the present invention contains a coenzyme Q and an ammonia generation inhibitor, the weight ratio of the coenzyme Q to the ammonia generation inhibitor in the composition is preferably about 100:1 to 1:100.

The effect of preventing ascites and sudden death syndrome can be improved much more when the feed composition for poultry of the present invention which contains a coenzyme Q and a substance selected from antioxidants, antacid agents and ammonia generation inhibitors is fed to poultry, specifically chickens, particularly broilers, than when a feed containing only a coenzyme Q is fed. Thereby, a great economic blow to the broiler industry can be avoided.

The present invention further provides a feed composition for poultry which contains a coenzyme Q and processed yeast cells.

In this case, the "feed composition for poultry containing a coenzyme Q and processed yeast cells" of the present invention refers to a feed composition for poultry which is blended with a coenzyme Q and processed yeast cells respectively, that is, a feed composition for poultry which is blended with processed yeast cells and further a coenzyme Q, whether or not the processed yeast cells contains the coenzyme Q, though there is processed yeast cells which contains a coenzyme Q.

Illustrative examples of the coenzyme Q used in the feed composition for poultry containing both a coenzyme

Q and processed yeast cells of the present invention include coenzyme $Q_9$ represented by the above general formula (I) and coenzyme $Q_{10}$ represented by the above general formula (II).

The content of the coenzyme Q contained in the feed composition for poultry containing a coenzyme Q and processed yeast cells of the present invention is, to state specifically, about 0.0005 to 0.5 wt% based on the total amount of the feed composition.

Further, in the feed composition for poultry containing a coenzyme Q and processed yeast cells of the present invention, the weight ratio of the coenzyme Q to the processed yeast cells contained in the composition is, to state specifically, about 50:1 to 1:2000.

Illustrative examples of the yeast used in the feed composition for poultry containing a coenzyme Q and processed yeast cells of the present invention include *Saccharomyces cerevisiae*, *Saccharomyces carlsbergensis*, *Yarrowia lipolytica*, *Torulopsis utilis*, *Trichosporon cutaneum* and the like.

By feeding this feed composition for poultry of the present invention containing a coenzyme Q and processed yeast cells to poultry, specifically chickens, particularly broilers, the effect of preventing ascites and sudden death syndrome can be improved, compared with the case where a feed containing only a coenzyme Q or a feed containing only processed yeast cells is fed. In the feed composition of the present invention containing both a coenzyme Q and processed yeast cells, the coenzyme Q is preserved stably at normal temperature in the feed composition. Even when it is given to a chicken after it is preserved at normal temperature for a long time, it is fully effective in preventing the occurrence of above ascites and SDS and improving the survival rate. Thus, use of the feed composition of the present invention makes it possible to protect broilers from ascites and sudden death syndrome and it is easy to store the feed composition. Therefore, the economic effect of the feed composition of the present invention on the broiler industry is extremely large.

The present invention is described in detail hereinunder. A description is first given of the feed composition for poultry of the present invention containing a coenzyme Q and a substance selected from the group consisting of antioxidants, antacid agents and ammonia generation inhibitors.

(1) Feed composition for poultry of the present invention containing a coenzyme Q and a substance selected from the group consisting of antioxidants, antacid agents and ammonia generation inhibitors

The coenzyme Q contained in the feed composition for poultry of the present invention is not limited to a particular kind if it is a compound which can fall under the category of coenzymes Q. Illustrative examples of the coenzyme Q include coenzyme $Q_6$, coenzyme $Q_7$, coenzyme $Q_8$, coenzyme $Q_9$, coenzyme $Q_{10}$ and reduction-type (quinol-type) coenzymes Q thereof. Out of these coenzymes Q, coenzyme $Q_9$ represented by the above general formula (I) and coenzyme $Q_{10}$ represented by the above general formula (II) are preferably used in the feed composition of the present invention.

As for the coenzyme Q contained in the feed composition for poultry of the present invention, filamentous fungi belonging to the genus *Mucor*, *Mortierella* or the like, yeasts belonging to the genus *Candida*, *Saccharomyces* or the like, bacilli belonging to the genus *Pseudomonas*, *Achromobacter*, *Rhodopseudomonas* or the like, tobacco leaves, germs of corn, wheat etc. and the like are known as source materials of the coenzyme Q. The coenzyme Q is obtained from the above source materials by extraction and purification in accordance with a commonly used method. When the coenzyme Q is blended into the feed composition for poultry of the present invention, a purified product of the coenzyme Q obtained as described above may be blended. Alternatively, an extract or a roughly purified product obtained from the above source materials, or any one of the source materials itself when the concentration of the coenzyme Q contained in the source materials is high can be blended. Further, a chemically synthesized coenzyme Q product which is commercially available may be used in the present invention. A composition prepared by mixing a coenzyme Q with other pharmaceutical agent, diluent, carrier, excipient and the like can also be blended.

Further, the content of the coenzyme Q in the feed composition for poultry of the present invention is preferably about 0.0005 to 0.5 wt% based on the total amount of the feed composition. Furthermore, in the present invention, a composition containing the coenzyme Q can be used as described above. In this case, the composition containing the coenzyme Q may be blended in the feed composition in such an amount that the content of the coenzyme Q should be 0.0005 to 0.5 wt% based on the total amount of the feed composition.

Further, the feed composition for poultry of the present invention contains a substance selected from the group consisting of antioxidants, antacid agents and ammonia generation inhibitors in addition to the coenzyme Q.

Illustrative examples of the antioxidant include vitamin E, ethoxyquin, selenium and the like. These antioxidants may be used alone or in admixture of two or more. Out of these, vitamin E is preferably used in the present invention. The term "vitamin E" as used herein is used as a general term for compounds having a vitamin E function, such as $\alpha$-tocopherol, $\beta$-tocopherol, $\gamma$-tocopherol, $\delta$-tocopherol and derivatives thereof. The vitamin E used in the present invention is not limited to a particular kind and selected from the group consisting of vitamin E compounds for use as a food or feed, which are commonly used as vitamin E. Out of these, d1-$\alpha$-tocopheryl acetate and the like are preferred from

a viewpoint of cost. It is also possible to blend tocopherol derived from corn, cottonseed, soy bean, wheat and the like into the feed composition of the present invention. Furthermore, it is possible to blend a composition prepared by mixing vitamin E with other pharmaceutical agent, diluent, carrier, excipient and the like.

When the feed composition for poultry of the present invention contains vitamin E and a coenzyme Q, the amount ratio of vitamin E to coenzyme Q contained in the composition is preferably about 0.01 to 100 IU as vitamin E activity based on 1 mg of the coenzyme Q.

The antacid agent used in the present invention is not limited to a particular kind and selected from the group consisting of sodium hydrogencarbonate, calcium carbonate, magnesium oxide and the like. These antacid agents may be used alone or in admixture of two or more. Out of these, sodium hydrogencarbonate is preferably used in the present invention. A standard product specified for use as a feed is preferred as the sodium hydrogencarbonate (chemical formula: $NaHCO_3$). However, the sodium hydrogencarbonate used in the present invention is not limited to this.

Furthermore, when the feed composition for poultry of the present invention contains an antacid agent and a coenzyme Q, the weight ratio of the coenzyme Q to the antacid agent contained in the composition is preferably about 1:2 to 1:4000.

Further, the ammonia generation inhibitor used in the present invention is not limited to a particular kind if it has a function to suppress the generation of ammonia in the body of a chicken. Illustrative examples of the agent include substances having a function to absorb ammonia in the intestines and excrete it to the outside of the body, such as dialdehyde starch (may be referred to as "DAS" hereinafter), and substances having a function as an urease inhibitor, such as Yucca extract, sarsasaponin, hydroxamic acid and the like. These ammonia generation inhibitors may be used alone or in admixture of two or more. The Yucca extract is an extract of Yucca schidigera which is belonging to a *Liliacede* plant.

Furthermore, out of these ammonia generation inhibitors, DAS is preferably used in the present invention. DAS can be produced by a commonly used method and a commercial product can be used. However, DAS having an aldehydization rate of 30 to 60 % is preferably used. Other ammonia generation inhibitors such as Yucca extract, sarsasaponin, hydroxamic acid and the like described above and used in the present invention can be produced by commonly used methods or commercial products can be used as well. It is also possible to blend compositions prepared by mixing these ammonia generation inhibitors with other pharmaceutical agent, diluent, carrier, excipient and the like into the feed composition of the present invention.

When the feed composition for poultry of the present invention contains an ammonia generation inhibitor and a coenzyme Q, the weight ratio of the coenzyme Q to the ammonia generation inhibitor contained in the composition is preferably about 100:1 to 1:100.

In the above feed composition for poultry of the present invention, at least one of the antioxidants, antacid agents and ammonia generation inhibitors may be used in combination with the coenzyme Q.

The feed composition for poultry of the present invention contains optional components other than the above essential components. For example, the optional components include as nutrient components such as corn, milo, soybean cake, vegetable oil, fish meal, wheat bran and wheat; mineral components such as sodium chloride, calcium carbonate, calcium secondary phosphate and a trace amount of mineral; vitamin formulations such as vitamin AD and vitamin B formulations; antibiotics such as salinomycin (anti-coccidium agent), colistin sulfate, enramycin and virginiamycin; components having pharmaceutical effects such as choline chloride; and the like.

The feed composition for poultry of the present invention is produced by blending the above raw materials, that is, a coenzyme Q, a substance selected from the group consisting of antioxidants, antacid agents and ammonia generation inhibitors, and optional components which are blended into an ordinary feed, and mixing them uniformly. It should be noted that the blending amount of each of the above raw materials is described above.

The dosage of the thus obtained feed composition for poultry of the present invention containing a coenzyme Q and a substance selected from the group consisting of antioxidants, antacid agents and ammonia generation inhibitors and the method of feeding it to poultry can be the same as those when an ordinary feed is used.

For instance, when a chicken is fed with the feed composition for poultry of the present invention for raising in the same manner as the ordinary feed, the dosage of the coenzyme Q for the chicken can be about 0.05 to 50 mg/kg weight per day which is calculated from the content of the coenzyme Q in the feed composition for poultry of the present invention and the normal feed intake of the chicken. As for other substances administered together with the coenzyme Q, their dosages per weight for each day can be calculated from their blending ratios to the coenzyme Q. When the above substances are blended into the feed and the chicken ingests them in the above dosages, the occurrence of ascites and SDS in the chicken in the stage of growth can be prevented and the survival rate can be improved.

Further, when the above feed composition for poultry of the present invention containing a coenzyme Q and a substance selected from the group consisting of antioxidants, antacid agents and ammonia generation inhibitors is given to poultry, it may be given to the poultry throughout the raising period of the poultry, or the feed composition for poultry of the present invention and an ordinary feed can be given to the poultry at intervals of a certain time alternately.

For instance, it is possible to feed the broilers with the ordinary feed for a period from its birth to about 21 days

old and then the feed composition of the present invention for the period of rapid growth from about 22 days old to the day of shipment. Alternatively, it is also possible to feed the broilers with the feed composition of the present invention for a period from its birth to about 21 days old when it is easily subjected to a cold stress and continuously with the feed composition of the present invention during a period from about 22 days old to the day of shipment. It is preferred that the feed composition of the present invention should be given for 20 consecutive days or more.

The poultry to which the above feed composition for poultry of the present invention containing a coenzyme Q and a substance selected from the group consisting of antioxidants, antacid agents and ammonia generation inhibitors is applied is not limited to a particular kind if it belongs to poultry. For example, the feed composition for poultry of the present invention can exhibit a great effect to chickens for meat production, particularly broilers which are raised in a limited environment for a short period of time. The feed composition for poultry of the present invention can also be applied to poultry other than poultry for meat production, such as laying chickens in the stage of growth.

A description is subsequently given of the feed composition for poultry of the present invention containing a coenzyme Q and processed yeast cells.

(2) Feed composition for poultry of the present invention containing a coenzyme Q and processed yeast cells

The coenzyme Q used in the feed composition for poultry of the present invention containing a coenzyme Q and processed yeast cells can be perfectly the same as the coenzyme detailed in the above paragraph (1). Further, the coenzyme Q used in the feed composition for poultry of the present invention containing a coenzyme Q and processed yeast cells is preferably coenzyme $Q_9$ represented by the above general formula (I) or coenzyme $Q_{10}$ represented by the above general formula (II) as in the above composition for poultry described in (1). Furthermore, the acquisition and production process of the coenzyme Q and the blending form of the coenzyme Q into the feed composition for poultry are the same as in the above feed composition for poultry described in (1).

Further, the content of the coenzyme Q contained in the above feed composition for poultry of the present invention containing a coenzyme Q and processed yeast cells is, to state specifically, preferably about 0.0005 to 0.5 wt%, more preferably 0.001 to 0.1 wt% based on the total amount of the feed composition. Besides a purified product of a coenzyme Q, a composition containing a coenzyme Q may be used as described above. In this case, the composition containing the coenzyme Q may be blended into the feed composition to ensure that the content of the coenzyme Q should be within the above range, that is, about 0.0005 to 0.5 wt%, preferably 0.001 to 0.1 wt% based on the total amount of the feed composition. As for the content of the coenzyme Q in the composition, when the processed yeast cells contains the coenzyme Q, the content of the coenzyme Q in the composition should be the total of the amount of the coenzyme Q which has been blended as the coenzyme Q and the amount of the coenzyme Q contained in the processed yeast cells.

The feed composition for poultry of the present invention contains processed yeast cells in addition to the above coenzyme Q. The processed yeast cells used in the present invention refers to yeast cells and/or broken yeast cells into fragments whose water content is adjusted to 15 wt% or less based on their total amount. The term "yeast cells" as used herein denotes yeast cells themselves obtained from a cultured product by separation and also comprehends a cultured product containing yeast cells conceptually. The term "breaking into fragments" is used as a concept including a physical method for crushing mechanically and a chemical method such as bacteriolysis. The processed yeast cells defined as described above in the specification is easily obtained by using a common yeast separation method, yeast fragmenting method, dry method and the like, from a cultured product obtained by cultivating yeast by a common method. Such processed yeast cells, for example, can be produced as follows.

A medium usually used to cultivate yeast is used to cultivate yeast by a commonly used cultivation method and yeast cells are taken out from the thus obtained cultured product by filtration or centrifugal separation. The yeast cells are dried until their water content becomes 15% or less based on their total weight directly or after they are broken into fragments by a physical processing method using a high-pressure homogenizer, hot water or the like, a chemical processing method using an acid, alkali or the like, a biochemical processing method using a cell wall decomposition enzyme such as zymolyase or the like, or so on to prepare processed yeast cells. Incidentally, for drying, a commonly used drying method such as heat drying and freeze drying may be used.

Alternatively, a cultured product obtained by cultivating yeast using a commonly used medium and a commonly used cultivation method is dried in the same manner as described above until its water content becomes 15% or less based on its total amount directly or after the yeast cells in the cultured product are broken into fragments by an appropriate method selected from the group consisting of a physical processing method using a high-pressure homogenizer, hot water or the like, a chemical processing method using an acid, alkali or the like, a biochemical processing method using a cell wall decomposition enzyme such as zymolyase or the like, and so on to prepare the processed yeast cells.

Further, a cultured product which is cultured for the purpose of obtaining a specific component produced from yeast cells by cultivation, from which the specific component is removed, and which contains yeast cells is dried until its water content becomes 15% or less based on its total weight directly or after the yeast cells contained in the cultured

product are broken into fragments to prepare the processed yeast cells. The processed yeast cells also can be prepared by taking out the yeast cells from the cultured product in the same manner as described above and drying them until their water content becomes 15% or less based on their total weight directly or after they are broken into fragments.

The yeast of the processed yeast cells used in the present invention is not limited to a particular kind if it is an yeast having a function to help the function of the coenzyme Q and preserve the coenzyme Q stably in the composition. Illustrative examples of the yeast include Torula yeast e.g. *Torulopsis utilis*, bread yeast, beer yeast e.g. *Saccharomyces cerevisiae* and *Saccharomyces carlsbergensis*, an yeast used in the fermentation of organic acids e.g. *Yarrowia lipolytica*, an yeast used for test index e.g. *Trichosporon cutaneum*, and the like.

Further, the weight ratio of the coenzyme Q to the processed yeast cells contained in the feed composition for poultry of the present invention is preferably about 50:1 to 1:2000, more preferably about 1:50 to 1:1500.

The feed composition for poultry of the present invention containing a coenzyme Q and processed yeast cells contains optional components other than the above essential components. For example, the optional components include nutrient components such as corn, milo, soybean cake, vegetable oil, fish meal, rice bran, wheat bran and wheat; mineral components such as sodium chloride, shell, egg shell, calcium carbonate, calcium secondary phosphate and a trace amount of mineral; vitamin formulations such as vitamin ADE and vitamin B formulations; antibiotics such as salinomycin (anticoccidium agent), colistin sulfate, enramycin and virginiamycin; components having pharmaceutical effects such as choline chloride, and the like. Further, the above optional components also include antioxidants, antacid agents and ammonia generation inhibitors listed in the above paragraph (1).

The feed composition for poultry of the present invention containing a coenzyme Q and processed yeast cells is produced by blending the above raw materials, that is, a coenzyme Q and processed yeast cells, and optional components which are usually blended in an ordinary feed if required and by mixing them uniformly. It should be noted that the above raw materials are blended to ensure that the contents of the coenzyme Q and the processed yeast cells should fall within the above-described ranges based on the total amount of the composition.

The dosage of the thus obtained feed composition for poultry of the present invention containing a coenzyme Q and processed yeast cells and the method for feeding it to poultry can be the same as those when an ordinary feed is used.

For instance, when a chicken is fed with the feed composition for poultry of the present invention containing a coenzyme Q and processed yeast cells for raising in the same manner as the ordinary feed, the dosage of the coenzyme Q for the chicken can be about 0.05 to 50 mg/kg weight, preferably 0.1 to 10 mg/kg weight per day which is calculated from the content of the coenzyme Q in the feed composition for poultry of the present invention and the normal feed intake of the chicken. As for the processed yeast cells, its dosage per weight for each day can be calculated from its blending ratio to the coenzyme Q in the above feed composition for poultry of the present invention. When the above coenzyme Q and the processed yeast cells are blended into the feed and the chicken ingests them in the above dosages, the occurrence of ascites and SDS in the chicken in the stage of growth can be prevented and the survival rate can be improved. The coenzyme Q can be preserved stably in the thus obtained feed composition of the present invention.

When the feed composition for poultry of the present invention containing a coenzyme Q and processed yeast cells is given to poultry, it may be given to the poultry throughout the raising period of the poultry, or the feed composition for poultry of the present invention and an ordinary feed can be given to the poultry at intervals of a certain time alternately.

For instance, it is possible to feed the broilers with the ordinary feed for a period from its birth to about 21 days old and then the feed composition of the present invention for the period of rapid growth from about 22 days old to the day of shipment. Alternatively, it is also possible to feed the broilers with the feed composition of the present invention for a period from its birth to about 21 days old when it is easily subjected to a cold stress and continuously with the feed composition of the present invention during a period from about 22 days old to the day of shipment. It should be noted that it is preferred that the feed composition of the present invention should be given for 14 consecutive days or more.

Further, the poultry to which the above feed composition for poultry of the present invention containing a coenzyme Q and processed yeast cells is applied is not limited to a particular kind if it belongs to poultry. Specifically, the poultry is the same as the poultry to which the above feed composition for poultry described in (1) is applied.

## BEST MODE FOR CARRYING OUT THE INVENTION

The following examples are given to further illustrate the present invention. A description is first given of production examples of the coenzyme $Q_{10}$ formulation, vitamin E formulation and DAS formulation to be blended into the feed composition for poultry of the following examples and comparative examples.

Production Example 1 : Coenzyme $Q_{10}$ formulation

A coenzyme $Q_{10}$ formulation was produced by blending 20 g of coenzyme $Q_{10}$ based on 1 kg of wheat bran and mixing them uniformly.

Production Example 2 : Vitamin E formulation

A vitamin E formulation was produced by blending 45,000 mg of d1-$\alpha$-tocopheryl acetate (45,000 IU in terms of vitamin E activity) based on 1 kg of wheat bran and mixing them uniformly.

Production Example 3 : DAS formulation

A DAS formulation was produced by blending 20 g of DAS, of which aldehydization rate is 50%, based on 1 kg of wheat bran and mixing them uniformly.

A description is subsequently given of examples prepared using the formulations obtained in the above Production Examples.

Examples 1 and 2

Components shown in Table 1 were mixed to prepare feed compositions containing coenzyme $Q_{10}$ and vitamin E as Examples 1 and 2. For comparison, feed compositions which contain vitamin E but do not contain a coenzyme Q were prepared as Comparative Examples 1 and 2 and feed compositions which contain a coenzyme Q but do not contain vitamin E were prepared as Comparative Examples 3 and 4.

Table 1

| Components | Blending proportion (wt%) | | | | | |
|---|---|---|---|---|---|---|
| | Examples | | Comparative Examples | | | |
| | 1 | 2 | 1 | 2 | 3 | 4 |
| Feed A (Components; see Table 2) | 99.8 | - | 99.9 | - | 99.9 | - |
| Feed B (Components; see Table 2) | - | 99.8 | - | 99.9 | - | 99.9 |
| Vitamin E formulation of Production Example 2 | 0.1 | 0.1 | 0.1 | 0.1 | - | - |
| Coenzyme $Q_{10}$ of Production Example 1 | 0.1 | 0.1 | - | - | 0.1 | 0.1 |

Table 2

| Components | Blending proportion (parts by weight) | |
|---|---|---|
| | Basic feed A | Basic feed B |
| corn | 47.7 | 50.2 |
| milo | 10.0 | 20.0 |
| soybean cake | 24.8 | 13.6 |
| vegetable oil | 3.9 | 4.2 |
| fish meal | 9.0 | 8.0 |
| wheat bran | 1.3 | 2.5 |
| sodium chloride | 0.3 | 0.2 |
| calcium secondary phosphate | 0.5 | 0.5 |

Table 2 (continued)

| Components | Blending proportion (parts by weight) | |
|---|---|---|
| | Basic feed A | Basic feed B |
| vitamin AD formulation | 0.05 | 0.05 |
| vitamin B formulation | 0.1 | 0.1 |
| a trace amount of mineral | 0.05 | 0.05 |
| salinomycin (50 kg titer/kg) | 0.1 | 0.1 |
| virginiamycin (8 g titer/kg) | 0.15 | 0.15 |
| choline chloride(50% powder) | 0.05 | 0.05 |

In the above Table 2, the vitamin AD formulation contains 10,000 IU/g of vitamin A and 2,000 IU/g of vitamin $D_3$, and the vitamin B formulation contains 2 g/kg of Vitamin $B_1$, 10 g/kg of vitamin $B_2$, 2 g/kg of vitamin $B_6$, 2 g/kg of nicotinamide, 4 g/kg of calcium pantothenate, 120 g/kg of choline chloride and 1 g/kg of folic acid. The trace amount of mineral contains 8.0 % of Mn, 0.6 % of Fe, 0.06 % of Cu, 0.1 % of I and 5.0 % of Zn. It should be noted that salinomycin and virginiamycin are blended as anti-coccidium agent and antibiotic, respectively.

〈Evaluation of feed compositions of Examples 1 and 2〉

The feed compositions obtained in the above Examples and Comparative Examples were used to raise broilers and the effect of protecting the broilers from ascites and SDS by each of the feed compositions and the survival rate were evaluated.

Groups of day old broiler chicks (kind: Chunky (Roth Breeders Co.), mixtures of male and female broilers), each group consisting of 48 broiler chicks, were raised in a windless house (floor feeding) until 50 days old. As for raising conditions, the environmental temperature inside of the broiler house was set and controlled to temperatures shown in Table 3 (5 ± 1°C or lower for a period from 14 days old to 21 days old after the start of raising as a cooling sensation period and 21 to 26°C for other periods) at which ascites were easily caused.

Table 3

| Raising period | 0 to 3 days old | 4 days old to 13 days old | 14 days old to 21 days old | 22 days old to 31 days old | 32 days old to 50 days old |
|---|---|---|---|---|---|
| Temperature (°C) | 26°C | 25°C | 5 ± 1°C | 23°C | 21°C |

The group of broilers of Test Example 1 were fed with the feed composition obtained in Example 1 in the former stage (from birth to 21 days old, the same shall apply hereinunder) and the feed composition obtained in Example 2 in the latter stage (from 22 days old to 50 days old, the same shall apply hereinunder). For comparison, the group of broiler of Test Example 2 were fed with the feed composition obtained in Comparative Example 1 in the former stage and the feed composition obtained in Comparative Example 2 in the latter stage. Furthermore, the group of broilers of Test Example 3 were fed with the feed composition obtained in Comparative Example 3 in the former stage and the feed composition obtained in Comparative Example 4 in the latter stage. It should be noted that, during the raising period, the broilers had freely access to water and the feed compositions.

The broilers were raised under the above conditions and the number of broilers which died during the raising period was counted. The cause of death was identified for each of the dead broilers. After the completion of the raising period, the mortality rate of each group from ascites, SDS and others, the total of the mortality rates and the survival rate were calculated. The average weight was also calculated after the weights of the broilers were measured. The results are shown in Table 4.

Table 4

| | | | Test Example 1 | Test Example 2 | Test Example 3 |
|---|---|---|---|---|---|
| Feed composition used | Former stage (from 0 to 21) | | Feed of Example 1 | Feed of Comparative Example 1 | Feed of Comparative Example 3 |
| | Latter stage (from 22 to 50) | | Feed of Example 2 | Feed of Comparative Example 2 | Feed of Comparative Example 4 |
| Total number of broilers | | | 48 | 48 | 48 |
| Number of dead broilers (mortality rate) | Total | | 2(4.2%) | 13(27.1%) | 7(14.6%) |
| | Causes | Ascites | 1(2.1%) | 9(18.7%) | 4(8.3%) |
| | | SDS | 0 | 2(4.2%) | 1(2.1%) |
| | | Others | 1(2.1%) | 2(4.2%) | 2(4.2%) |
| Survival rate | | | 46(95.8%) | 35(72.9%) | 41(85.4%) |
| Average weight (g) | | | 2780 | 2530 | 2690 |

As is evident from the above results, the group of broilers of Test Example 1 which were fed with the feed composition of the present invention which contained both a coenzyme Q and vitamin E have a lower mortality rate from ascites and SDS and total mortality rate and a higher survival rate than the group of broilers of Test Example 2 which were fed with the feed compositions of Comparative Examples which contained only vitamin E and the group of broilers of Test Example 3 which were fed with the feed compositions of Comparative Examples which contained only a coenzyme Q. It is understood that the group of broilers of Test Example 1 were well grown with a larger average weight than the broilers of the other two groups.

Examples 3 and 4

Components shown in Table 5 were mixed to prepare feed compositions containing coenzyme $Q_{10}$ and sodium hydrogencarbonate as Examples 3 and 4. For comparison, feed compositions containing sodium hydrogencarbonate but not a coenzyme Q were prepared as Comparative Examples 5 and 6.

Table 5

| Components | Blending proportion (wt%) | | | |
|---|---|---|---|---|
| | Examples | | Comparative Examples | |
| | 3 | 4 | 5 | 6 |
| Basic feed A (components; see Table 2) | 99.4 | - | 99.5 | - |
| Basic feed B (components; see Table 2) | - | 99.4 | - | 99.5 |
| Sodium hydrogencarbonate | 0.5 | 0.5 | 0.5 | 0.5 |
| Coenzyme $Q_{10}$ formulation of Production Example 1 | 0.1 | 0.1 | - | - |

〈Evaluation of feed compositions of Examples 3 and 4〉

The feed compositions obtained in the above Examples and Comparative Examples were used to raise broilers and the effect of protecting the broilers from ascites and SDS by each of the feed compositions and the survival rate were evaluated.

Groups of day old broiler chicks (kind: Chunky (Roth Breeders Co.), mixtures of male and female broilers), each group consisting of 48 broiler chicks, were raised in a windless house (floor feeding) until 50 days old. The environmental temperature inside of the broiler house was the same as that in the above experiment on the evaluation of the feed compositions of Examples 1 and 2.

The group of broilers of Test Example 4 were fed with the feed composition obtained in Example 3 in the former stage (from birth to 21 days old, the same shall apply hereinunder) and the feed composition obtained in Example 4 in the latter stage (from 22 days old to 50 days old, the same shall apply hereinunder). For comparison, the group of broiler of Test Example 5 were fed with the feed composition obtained in Comparative Example 5 in the former stage and the feed composition obtained in Comparative Example 6 in the latter stage. Further, the group of broilers of Test Example 6 were fed with the feed composition obtained in Comparative Example 3 in the former stage and the feed composition obtained in Comparative Example 4 in the latter stage. During the raising period, the broilers had freely access to water and the feed compositions.

The broilers were raised under the above conditions and the number of broilers which died during the raising period was counted. The cause of death was identified for each of the dead broilers. After the completion of the raising period, the mortality rate of each group from ascites, SDS and others, the total of the mortality rates and the survival rate were calculated. The average weight was also calculated after the weights of the broilers were measured. The results are shown in Table 6.

Table 6

| | | | Test Example 4 | Test Example 5 | Test Example 6 |
|---|---|---|---|---|---|
| Feed composition used | Former stage (from 0 to 21) | | Feed of Example 3 | Feed of Comparative Example 5 | Feed of Comparative Example 3 |
| | Latter stage (from 22 to 50) | | Feed of Example 4 | Feed of Comparative Example 6 | Feed of Comparative Example 4 |
| Total number of broilers | | | 48 | 48 | 48 |
| Number of dead broilers (mortality rate) | Total | | 3(6.2%) | 13(27.1%) | 6(12.5%) |
| | Causes | Ascites | 1(2.1%) | 8(16.6%) | 3(6.2%) |
| | | SDS | 0 | 2(4.2%) | 1(2.1%) |
| | | Others | 2(4.1%) | 3(6.3%) | 2(4.2%) |
| Survival rate | | | 45(93.8%) | 35(72.9%) | 42(87.5%) |
| Average weight (g) | | | 2750 | 2531 | 2740 |

As is evident from the above results, the group of broilers of Test Example 4 which were fed with the feed composition of the present invention which contained both a coenzyme Q and sodium hydrogencarbonate have a lower mortality rate from ascites and SDS and total mortality rate and a higher survival rate than the group of broilers of Test Example 5 which were fed with the feed compositions of Comparative Examples which contained only sodium hydrogencarbonate and the group of broilers of Test Example 6 which were fed with the feed compositions of Comparative Examples which contained only a coenzyme Q. It is understood that the broilers of Test Example 4 were well grown with the equivalent or larger average weight than the broilers of the other two groups.

Examples 5 and 6

Components shown in Table 7 were mixed to prepare feed compositions containing coenzyme $Q_{10}$ and DAS as Examples 5 and 6. For comparison, feed compositions containing DAS but not a coenzyme Q were prepared as Comparative Examples 7 and 8.

Table 7

| Components | Blending proportion (wt%) | | | |
|---|---|---|---|---|
| | Examples | | Comparative Examples | |
| | 5 | 6 | 7 | 8 |
| Basic feed A (components; see Table 2) | 99.8 | - | 99.9 | - |
| Basic feed B (components; see Table 2) | - | 99.8 | - | 99.9 |

Table 7 (continued)

| Components | Blending proportion (wt%) | | | |
|---|---|---|---|---|
| | Examples | | Comparative Examples | |
| | 5 | 6 | 7 | 8 |
| DAS formulation of Production Example 3 | 0.1 | 0.1 | 0.1 | 0.1 |
| Coenzyme $Q_{10}$ formulation of Production Example 1 | 0.1 | 0.1 | - | - |

〈Evaluation of feed compositions of Examples 5 and 6〉

The feed compositions obtained in the above Examples and Comparative Examples were used to raise broilers and the effect of protecting the broilers from ascites and SDS by each of the feed compositions and the survival rate were evaluated.

Groups of day old broiler chicks (kind: Chunky (Roth Breeders Co.), mixtures of male and female broilers), each group consisting of 48 broiler chicks, were raised in a windless house (floor feeding) until 50 days old. The environmental temperature inside of the broiler house was the same as that in the above experiment on the evaluation of the feed compositions of Examples 1 and 2.

The group of broilers of Test Example 7 were fed with the feed composition obtained in Example 5 in the former stage (from birth to 21 days old, the same shall apply hereinunder) and the feed composition obtained in Example 6 in the latter stage (from 22 days old to 50 days old, the same shall apply hereinunder). For comparison, the group of broiler of Test Example 8 were fed with the feed composition obtained in Comparative Example 7 in the former stage and the feed composition obtained in Comparative Example 8 in the latter stage. Furthermore, the group of broilers of Test Example 9 were fed with the feed composition obtained in Comparative Example 3 in the former stage and the feed composition obtained in Comparative Example 4 in the latter stage. During the raising period, the broilers had freely access to water and the feed compositions.

The broilers were raised under the above conditions and the number of broilers which died during the raising period was counted. The cause of death was identified for each of the dead broilers. After the completion of the raising period, the mortality rate of each group from ascites, SDS and others, the total of the mortality rates and the survival rate were calculated. The average weight was also calculated after the weights of the broilers were measured. The results are shown in Table 8.

Table 8

| | | | Test Example 7 | Test Example 8 | Test Example 9 |
|---|---|---|---|---|---|
| Feed composition used | Former stage (from 0 to 21) | | Feed of Example 5 | Feed of Comparative Example 7 | Feed of Comparative Example 3 |
| | Latter stage (from 22 to 50) | | Feed of Example 6 | Feed of Comparative Example 8 | Feed of Comparative Example 4 |
| Total number of broilers | | | 48 | 48 | 48 |
| Number of dead broilers (mortality rate) | Total | | 2(4.2%) | 9(18.7%) | 5(10.4%) |
| | Causes | Ascites | 1(2.1%) | 6(12.4%) | 3(6.2%) |
| | | SDS | 0 | 1(2.1%) | 1(2.1%) |
| | | Others | 1(2.1%) | 2(4.2%) | 1(2.1%) |
| Survival rate | | | 46(95.8%) | 39(81.3%) | 43(89.6%) |
| Average weight (g) | | | 2770 | 2720 | 2760 |

As is evident from the above results, the group of broilers of Test Example 7 which were fed with the feed composition of the present invention which contained both a coenzyme Q and DAS have a lower mortality rate from ascites and SDS and total mortality rate and a higher survival rate than the group of broilers of Test Example 8 which were fed with the feed compositions of Comparative Examples which contained only DAS and the group of broilers of Test Example 9 which were fed with the feed compositions of Comparative Examples which contained only a coenzyme Q. It is

understood that the broilers of Test Example 7 were well grown with the equivalent or larger average weight than the broilers of the other two groups.

Examples 7 and 8

Components shown in Table 9 were mixed to prepare feed compositions containing coenzyme $Q_{10}$ and processed yeast cells as Examples 7 and 8. For comparison, feed compositions containing processed yeast cells but not a coenzyme Q were prepared as Comparative Examples 9 and 10 and feed compositions containing a coenzyme Q but not processed yeast cells were prepared as Comparative Examples 11 and 12. The torula yeast processed product used in these examples is Torula yeast produced by Kojin Co. which is a thermally decomposed product of *Torulopsis utilis*. The coenzyme $Q_{10}$ (reagent name: Ubiquinone 10) produced by Wako Pure Chemical Industries, Ltd. was used as the coenzyme Q.

Table 9

| Components | Blending proportion (parts by weight) | | | | | |
|---|---|---|---|---|---|---|
| | Examples | | Comparative Examples | | | |
| | 7 | 8 | 9 | 10 | 11 | 12 |
| Basic feed C (components; see Table 10) | 1000 | - | 1000 | - | 1000 | - |
| Basic feed D (components; see Table 10) | - | 1000 | - | 1000 | - | 1000 |
| Coenzyme $Q_{10}$ | 0.02 | 0.02 | - | - | 0.02 | 0.02 |
| Torula yeast processed product | 0.98 | 0.98 | 1 | 1 | - | - |
| wheat bran | - | - | - | - | 0.98 | 0.98 |

Table 10

| Components | Blending proportion (parts by weight) | |
|---|---|---|
| | Basic feed C | Basic feed D |
| corn | 47.0 | 49.5 |
| milo | 10.0 | 20.0 |
| soybean cake | 24.8 | 13.6 |
| vegetable oil | 3.9 | 4.2 |
| fish meal | 9.0 | 8.0 |
| wheat bran | 1.3 | 2.5 |
| sodium chloride | 0.3 | 0.2 |
| calcium carbonate | 0.7 | 0.7 |
| calcium secondary phosphate | 0.5 | 0.5 |
| vitamin ADE formulation | 0.05 | 0.05 |
| vitamin B formulation | 0.1 | 0.1 |
| a trace amount of mineral | 0.05 | 0.05 |
| salinomycin (50 kg titer/kg) | 0.1 | 0.1 |
| virginiamycin (8 g titer/kg) | 0.15 | 0.15 |
| choline chloride | 0.05 | 0.05 |

In the above Table 10, the vitamin ADE formulation contains 10,000 IU/g of vitamin A, 2,000 IU/g of vitamin D and 10 IU/g of vitamin E, and the vitamin B formulation contains 2 g/kg of Vitamin $B_1$, 10 g/kg of vitamin $B_2$, 2 g/kg of vitamin $B_6$, 2 g/kg of nicotinamide, 120 g/kg of choline chloride and 1 g/kg of folic acid. The trace amount of mineral contains 8.0 % of Mn, 0.6 % of Fe, 0.06 % of Cu, 0.1 % of I and 5.0 % of Zn. It should be noted that salinomycin and virginiamycin are blended as anti-coccidium agent and antibiotic, respectively.

〈Evaluation of feed compositions of Examples 7 and 8 (Experiments on raising of broilers)〉

The feed compositions obtained in the above Examples and Comparative Examples were used to raise broilers and the effect of protecting the broilers from ascites and SDS by each of the feed compositions and the survival rate were evaluated.

Groups of day old broiler chicks (kind: Chunky (Roth Breeders Co.), mixtures of male and female broilers), each group consisting of 48 broiler chicks, were raised in a windless house (floor feeding) until 50 days old. The environmental temperature inside of the broiler house was the same as that in the above experiment on the evaluation of the feed compositions of Examples 1 and 2.

The group of broilers of Test Example 10 were fed with the feed composition obtained in Example 7 in the former stage (from birth to 21 days old, the same shall apply hereinunder) and the feed composition obtained in Example 8 in the latter stage (from 22 days old to 50 days old, the same shall apply hereinunder). For comparison, the group of broilers of Test Example 11 were fed with the feed composition obtained in Comparative Example 9 in the former stage and the feed composition obtained in Comparative Example 10 in the latter stage. Further, the group of broilers of Test Example 12 were fed with the feed composition obtained in Comparative Example 11 in the former stage and the feed composition obtained in Comparative Example 12 in the latter stage. During the raising period, the broilers had freely access to water and the feed compositions.

The broilers were raised under the above conditions and the number of broilers which died during the raising period was counted. The cause of death was identified for each of the dead broilers. After the completion of the raising period, the mortality rate of each group from ascites, SDS and others, the total of the mortality rates and the survival rate were calculated. The average weight was also calculated after the weights of the broilers were measured. The results are shown in Table 11.

Table 11

| | | | Test Example 10 | Test Example 11 | Test Example 12 |
|---|---|---|---|---|---|
| Feed composition used | Former stage (from 0 to 21) | | Feed of Example 7 | Feed of Comparative Example 9 | Feed of Comparative Example 11 |
| | Latter stage (from 22 to 50) | | Feed of Example 8 | Feed of Comparative Example 10 | Feed of Comparative Example 12 |
| Total number of broilers | | | 48 | 48 | 48 |
| Number of dead broilers (mortality rate) | Total | | 3(6.3%) | 15(31.3%) | 7(14.6%) |
| | Causes | Ascites | 1(2.1%) | 10(20.8%) | 4(8.3%) |
| | | SDS | 0 | 3(6.3%) | 1(2.1%) |
| | | Others | 2(4.2%) | 2(4.2%) | 2(4.2%) |
| Survival rate | | | 45(93.7%) | 33(68.7%) | 41(85.4%) |
| Average weight (g) | | | 2820 | 2710 | 2705 |

As is evident from the above results, the group of broilers of Test Example 10 which were fed with the feed composition of the present invention which contained both a coenzyme Q and processed yeast cells have a lower mortality rate from ascites and SDS and total mortality rate and a higher survival rate than the group of broilers of Test Example 11 which were fed with the feed compositions of Comparative Examples which contained only processed yeast cells and the group of broilers of Test Example 12 which were fed with the feed compositions of Comparative Examples which contained only a coenzyme Q. It is understood that the broilers of Test Example 10 were well grown with a larger average weight than the broilers of the other two groups.

Examples 9 and 10

Components shown in Table 12 were mixed to prepare feed compositions containing coenzyme $Q_{10}$ and processed yeast cells as Examples 9 and 10. For comparison, feed compositions containing a coenzyme Q but not processed yeast cells were prepared as Comparative Examples 13 and 14. The torula yeast processed product used in these examples is Torula yeast produced by Kojin Co. which is a thermally decomposed product of *Torulopsis utilis* and the beer yeast processed product is a dry yeast of *Saccharomyces cerevisiae* produced by Asahi Brewery Ltd. The coenzyme $Q_{10}$ (reagent name: Ubiquinone 10) produced by Wako Pure Chemical Industries, Ltd. was used as the coenzyme Q.

Table 12

| Components | Blending proportion (wt%) | | | |
|---|---|---|---|---|
| | Examples | | Comparative Examples | |
| | 9 | 10 | 13 | 14 |
| Coenzyme $Q_{10}$ | 1.0 | 1.0 | 1.0 | 1.0 |
| Torula yeast processed product | 90.0 | - | - | - |
| beer yeast processed product | - | 99.0 | - | - |
| soybean oil | 9.0 | - | 9.0 | - |
| rice bran | - | - | 90.0 | - |
| wheat bran | - | - | - | 99.0 |

〈Evaluation of feed compositions of Examples 9 and 10 (Storage stability test on coenzyme Q)〉

Two different tests on the storage stability of the coenzyme Q contained in the feed compositions obtained in the above Examples 9 and 10 and Comparative Examples 13 and 14 were conducted to evaluate the feed compositions of the present invention.

(1) Storage stability test (1)

The feed composition obtained in the above Example 9 and the feed composition obtained in the above Comparative Example 13 were directly placed in respective polyethylene bags which were then sealed hermetically and left to stand at room temperature for 12 weeks. During this standing period, the concentration of coenzyme $Q_{10}$ contained in the two different feed compositions were measured in accordance with the following method with the lapse of time i.e. at the time of start, after 2 weeks, 4 weeks, 8 weeks and 12 weeks. The results are shown in Table 13.

(Method of measuring concentration of coenzyme $Q_{10}$ in feed composition)

The concentration of coenzyme $Q_{10}$ contained in each of the above feed compositions was measured in accordance with the method of measuring the concentration of coenzyme $Q_{10}$ contained in the excipient of a KR yeast (yeast for feed) ("Sequel of Lectures on Biochemical Experiments" (edited by the Japan Association of Society, Tokyo Kagaku Dojin, Vol. 13, 1975)).

About 0.3 g of the feed composition was precisely weighed as a sample and this weight was recorded as the amount (g) of the sample. This precisely weighed sample was placed in a heat resistant screw bottle (capacity of 100 ml) filled with 100 ml of ethanol (99.5 %) and stirred with a stirrer at room temperature for 10 minutes. Thereafter, the heat resistant screw bottle was placed in a hot bath (50°C) and heated for 15 minutes under agitation at times to extract coenzyme $Q_{10}$. After extraction, the mixture was further stirred with the stirrer at room temperature for 10 minutes.

About 5 ml of the thus obtained suspension was subjected to centrifugal separation (12,000 rpm, 5 minutes), and the thus obtained supernatant was diluted with ethanol as required and applied to a quartz absorbance cell to measure its absorbance at 275 nm with a spectrophotometer. The obtained absorbance is the absorbance of oxidation-type coenzyme $Q_{10}$.

Then, 1 mg of sodium boron hydride was added to the quartz absorbance cell used for the measurement of absorbance and left to stand for about 60 minutes until foaming came to an end. Thereafter, the absorbance at 275 nm

of this resulting mixture was measured with a spectrophotometer. The obtained absorbance is the absorbance of reduction-type coenzyme $Q_{10}$.

The measurement values obtained above were inserted into the following equation to calculate the concentration (mg/g) of coenzyme $Q_{10}$ contained in 1 g of the sample down to the second decimal place.

$$\text{Concentration of coenzyme } Q_{10} \text{ (mg/g)} = (A - B) \times 100 \times C/(14.2 \times D)$$

A: absorbance of oxidation-type coenzyme $Q_{10}$
B: absorbance of reduction-type coenzyme $Q_{10}$
C: dilution rate
D: amount of sample (g)

Table 13

| Feed composition / storage period | Concentration of coenzyme $Q_{10}$ in the composition (mg/g) | | | | |
|---|---|---|---|---|---|
| | 0 day | after 2 weeks | after 4 weeks | after 8 weeks | after 12 weeks |
| Feed composition of Example 9 | 1.09 | 1.09 | 1.09 | 1.09 | 1.09 |
| Feed composition of Comparative Example 13 | 1.11 | 0.88 | 0.23 | 0.00 | 0.00 |

(2) Storage stability test (2)

The feed composition obtained in the above Example 10 and the feed composition obtained in the above Comparative Example 14 were directly placed in respective polyethylene bags which were then sealed hermetically and left to stand at 40°C and a relative humidity of 75% for 6 months. During this standing period, the concentration of coenzyme $Q_{10}$ contained in the two different feed compositions were measured in accordance with the same method as in the above test (1) with the lapse of time i.e. at the time of start, after 1 month, 2 months, 3 months and 6 months. The results are shown in Table 14.

Table 14

| Feed composition / storage period | Concentration of coenzyme $Q_{10}$ in the composition (mg/g) | | | | |
|---|---|---|---|---|---|
| | 0 day | after 1 month | after 2 months | after 3 months | after 6 months |
| Feed composition of Example 10 | 1.02 | 1.00 | 0.97 | 0.94 | 0.92 |
| Feed composition of Comparative Example 14 | 1.04 | 0.91 | 0.86 | 0.79 | 0.75 |

It is seen from the above results that the feed compositions of the present invention which contain both a coenzyme Q and processed yeast cells are superior in storage stability to the feed compositions of Comparative Examples which contain a coenzyme Q and not processed yeast cells because the content of the coenzyme Q in the feed composition of the present invention rarely changes with the lapse of time even during 6 months of storage period.

## INDUSTRIAL APPLICABILITY

The feed composition for poultry of the present invention which contains a coenzyme Q and a substance selected from the group consisting of antioxidants, antacid agents and ammonia generation inhibitors has such effects that it prevents ascites and sudden death syndrome effectively during the raising of poultry raised mainly for meat production purposes such as chickens, particularly broilers, and that it improves the survival rate. The feed composition for poultry of the present invention which contains a coenzyme Q and processed yeast cells has such effects that it prevents ascites and sudden death syndrome effectively during the raising of poultry raised mainly for meat production purposes such as chickens, particularly broilers, and that it improves the survival rate as well as the feed composition for poultry which can preserve an effective component stably during the long term storage of the feed at normal temperature and maintain an activity.

## Claims

1. A feed composition for poultry which contains a coenzyme Q and a substance selected from the group consisting of antioxidants, antacid agents and ammonia generation inhibitors.

2. The feed composition for poultry according to claim 1, wherein the coenzyme Q is coenzyme $Q_9$ represented by the following general formula (I) or coenzyme $Q_{10}$ represented by the following general formula (II).

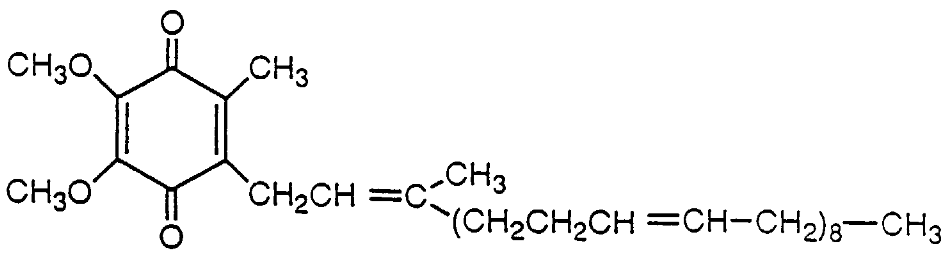

( I )

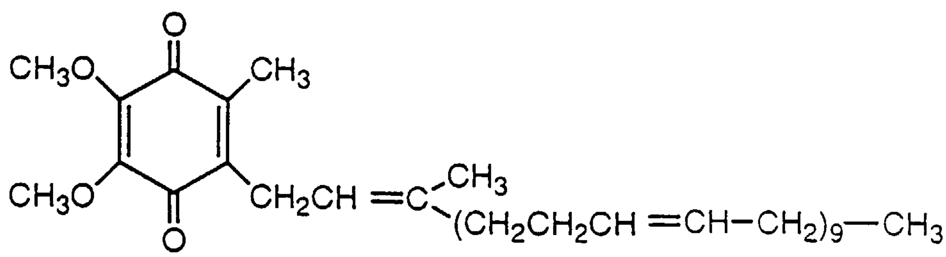

( II )

3. The feed composition for poultry according to claim 1, wherein the antioxidant is vitamin E.

4. The feed composition for poultry according to claim 1, wherein the antacid agent is sodium hydrogencarbonate.

5. The feed composition for poultry according to claim 1, wherein the ammonia generation inhibitor is selected from the group consisting of dialdehyde starch, Yukka extract, sarsasaponin and hydroxamic acid.

6. The feed composition for poultry according to claim 1, wherein the content of the coenzyme Q is 0.0005 to 0.5 wt% based on the total amount of the feed composition.

7. The feed composition for poultry according to claim 3 containing vitamin E, wherein the amount ratio of vitamin E to coenzyme Q contained in the composition is 0.01 to 100 IU as vitamin E activity based on 1 mg of the coenzyme Q.

8. The feed composition for poultry according to claim 1 containing an antacid agent, wherein the weight ratio of the coenzyme Q to the antacid agent contained in the composition is 1:2 to 1:4000.

9. The feed composition for poultry according to claim 1 containing an ammonia generation inhibitor, wherein the weight ratio of the coenzyme Q to the ammonia generation inhibitor contained in the composition is 100:1 to 1:100.

10. A feed composition for poultry which contains a coenzyme Q and processed yeast cells.

11. The feed composition for poultry according to claim 10, wherein the coenzyme Q is coenzyme $Q_9$ represented by the following general formula (I) or coenzyme $Q_{10}$ represented by the following general formula (II).

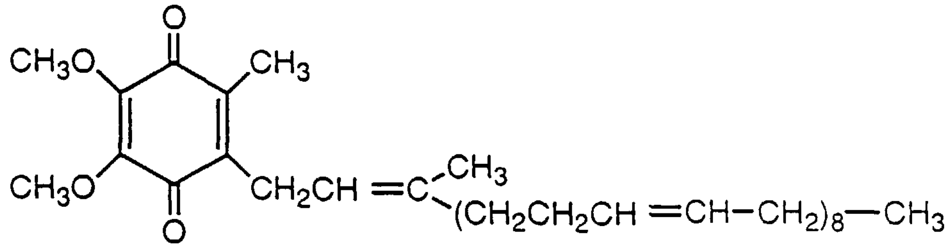

( I )

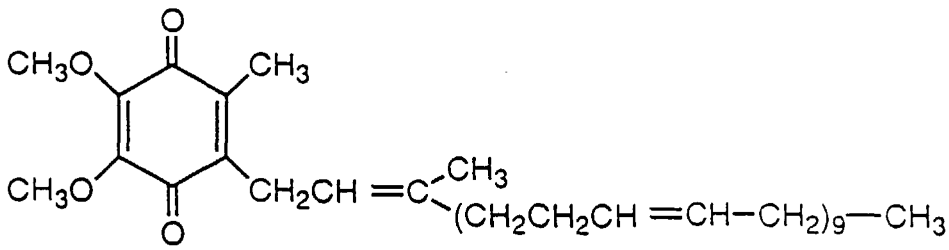

( II )

**12.** The feed composition for poultry according to claim 10, wherein the content of the coenzyme Q is 0.0005 to 0.5 wt% based on the total amount of the feed composition.

**13.** The feed composition for poultry according to claim 10, wherein the weight ratio of the coenzyme Q to the processed yeast cells contained in the composition is 50:1 to 1:2000.

**14.** The feed composition for poultry according to claim 10, wherein the yeast is selected from the group consisting of *Saccharomyces cerevisiae*, *Saccharomyces carlsbergensis*, *Yarrowia lipolytica*, *Torulopsis utilis* and *Trichosporon cutaneum.*

**INTERNATIONAL SEARCH REPORT**

International application No. PCT/JP97/02334

**A. CLASSIFICATION OF SUBJECT MATTER**

Int. Cl$^6$ A23K1/16, 1/165, 1/18

According to International Patent Classification (IPC) or to both national classification and IPC

**B. FIELDS SEARCHED**

Minimum documentation searched (classification system followed by classification symbols)

Int. Cl$^6$ A23K1/16, 1/165, 1/18

Documentation searched other than minimum documentation to the extent that such documents are included in the fields searched

Jitsuyo Shinan Koho 1922 - 1997
Kokai Jitsuyo Shinan Koho 1971 - 1997
Toroku Jitsuyo Shinan Koho 1994 - 1997
Jitsuyo Shinan Toroku Koho 1996 - 1997

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 6-287136, A (Idemitsu Materials Co., Ltd.), October 11, 1994 (11. 10. 94), Full descriptions & WO, 9422433, A1 & AU, 6291994, A1 | 1-3, 6-8, 10-14<br>4-5, 9 |
| X<br>Y<br>A | JP, 62-31684, B2 (Eisai Co., Ltd.), July 9, 1987 (09. 07. 87), Claim; column 9, line 5 to column 10, line 9 (Family: none) | 1-2, 6, 8<br>3-5, 7, 9<br>10 - 14 |
| A | JP, 7-123928, A (Ajinomoto Co., Ltd.), May 16, 1995 (16. 05. 95)(Family: none) | 1 - 14 |
| A | JP, 56-42912, B2 (Kaneka Corp.), October 7, 1981 (07. 10. 81) & DE, 2747510, A1 & FR, 2369342, A1 & US, 4194065, A1 | 1 - 14 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| July 18, 1997 (18. 07. 97) | August 5, 1997 (05. 08. 97) |
| Name and mailing address of the ISA/ Japanese Patent Office | Authorized officer |
| Facsimile No. | Telephone No. |

Form PCT/ISA/210 (second sheet) (July 1992)